Europäisches Patentamt

European Patent Office

Office européen des brevets

(19)

(11) Numéro de publication: **0 239 449**
**B1**

(12) **FASCICULE DE BREVET EUROPEEN**

(45) Date de publication du fascicule du brevet:
07.11.90

(51) Int. Cl.⁵: **B60G 3/20**

(21) Numéro de dépôt: **87400421.1**

(22) Date de dépôt: **25.02.87**

(54) **Suspension de roue indépendante notamment arrière de véhicule et son application à une roue motrice.**

(30) Priorité: **20.03.86 FR 8604003**

(43) Date de publication de la demande:
**30.09.87 Bulletin 87/40**

(45) Mention de la délivrance du brevet:
**07.11.90 Bulletin 90/45**

(84) Etats contractants désignés:
**DE ES GB IT**

(56) Documents cités:
**EP-A- 0 052 154**
**EP-A- 0 052 663**
**EP-A- 0 083 183**
**EP-A- 0 136 563**
**DE-A- 3 022 055**
**FR-A- 1 294 372**
**FR-A- 1 539 072**
**FR-A- 2 281 242**
**FR-A- 2 516 869**
**GB-A- 2 130 539**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Froumajou, Armand, 11 bis, rue Docteur Laennec, F-95520 Osny(FR)**

(74) Mandataire: **Bressand, Georges et al, c/o CABINET LAVOIX 2 Place d'Estienne d'Orves, F-75441 Paris Cédex 09(FR)**

## Description

L'invention concerne une suspension de roue de véhicule, plus particulièrement de roue arrière indépendante, qui comprend un porte-roue et des bras transversaux qui sont agencés avec une géométrie telle qu'elle permet en elle-même d'assurer une bonne qualité de filtrage des vibrations, un bon guidage de la roue et une possibilité d'ajustement du comportement routier.

Comme il est connu, les roues indépendantes de véhicule comportent un support de roue relié à la structure, la caisse ou le châssis du véhicule, par l'intermédiaire d'éléments de guidage ou bras qui maintiennent le support de roue. Ces éléments de guidage sont reliés au support de roue et à la structure à l'aide d'articulations qui présentent une certaine elasticité. Grâce à ces liaisons qui présentent une certaine élasticité, le support de roue peut se déplacer non seulement selon les axes géométriques théoriques que définissent ces articulations mais aussi, dans une certaine mesure et avec des limites déterminées, peut subir de petits basculements.

Selon la position qu'on donne à ces axes de basculement, la roue est susceptible de subir une petite rotation par rapport à un axe voisin de la verticale lorsqu'elle est soumise à des forces latérales telles que celles qui se manifestent en virage . L'amplitude de cette petite rotation et son sens influent de manière notable sur le comportement routier du véhicule.

Comme on le sait, lorsqu'un tel basculement ou rotation de la roue arrière se fait dans le sens d'une divergence ou ouverture, par rapport au sens de marche du véhicule, le véhicule tend à être sur-vireur. Ce phénomène est particulièrement apprécié des conducteurs qui ont un tempérament sportif. Par contre, lorsque cette rotation s'effectue dans le sens d'une convergence ou pincement, la voiture à un comportement "sous-vireur" qui est la solution adoptée pour les véhicules pour lesquels on souhaite une stabilité directionnelle procurant un confort notable de conduite. On voit donc que selon la solution retenue on aura un véhicule qui aura un comportement sous-vireur ou sur-vireur.

Lorsqu'on construit des véhicules en série, il est particulièrement commode de pouvoir obtenir l'un ou l'autre de ces deux comportements en utilisant les mêmes éléments de base et en agissant seulement sur le réglage final de ces éléments afin de minimiser les coûts de production notamment en réduisant le nombre d'éléments différant entre les véhicules à comportement sportif et les véhicules à comportement confortable.

Ce type de problème à trouvé une solution qui est rapportée par la demande de brevet français FR-A-2,497,155. Selon ce document, la suspension de roue arrière de véhicule comprend un support de roue qui est relié à la structure par l'intermédiaire de deux éléments de guidage qui définissent un point d'articulation supérieur et un point d'articulation inférieur et d'une biellette reliée elle-aussi au support de roue et à la structure du véhicule. Pour obtenir en virage, un micro-braquage stabilisateur c'est-à-dire un comportement sous-vireur, on fait en sorte que les points d'articulation sur les éléments de guidage définissent un axe de pivotement situé, en arrière du plan vertical de l'essieu et on donne une certaine flexibilité à l'articulation qui relie la biellette au support de roue. En donnant une certaine élasticité complémentaire à l'articulation supérieure du support de roue et en la combinant avec une inclinaison, en élévation, de l'axe défini par l'articulation inférieure du support de roue et l'articulation de la biellette, on peut ajuster l'effet recherché. On observera qu'une telle disposition ne permet qu'une très petite correction du phénomène de base dont le sens et l'amplitude sont déterminés, une fois pour toute, par le décalage de l'axe de pivotement défini par les articulations supérieure et inférieure du support de roue sur les éléments de guidage. On observera aussi par ailleurs, que ce décalage provoque, quel que soit celui des éléments de guidage choisi pour être porteur, un couple important sur le support de roue. Ce couple se traduit par des efforts permanents, dans le plan horizontal, sur les attaches à la caisse des éléments supérieur et inférieur. La présence de ces efforts permanents à transmettre interdit toute filtration longitudinale des vibrations transmises à la caisse par les articulations. Il est alors nécessaire d'assurer le filtrage à l'aide d'autres techniques telles que par exemple l'interposition d'un berceau intermédiaire monté très souple sur la caisse ce qui, bien sûr, a pour conséquence d'être coûteux et de dégrader la précision selon laquelle la direction de la roue est assurée.

Le document FR A 2 281 242 traite d'une suspension indépendante de roue où un bras relié au moyeu de roue est monté oscillant sur un axe qui est pratiquement horizontal et longitudinal par rapport au châssis, et qui est relié au châssis à l'aide d'une butée sphérique non élastique et de butée élastique. Une telle suspension n'est pas totalement satisfaisante, notamment quant à son comportement dans les virages.

Le but de l'invention est de remédier à ces inconvénients tout en permettant avec un minimum d'éléments différents d'obtenir des comportements neutre sous-vireur ou sur-vireur selon la manière dont les parties constitutives de la suspension selon l'invention sont assemblées et réglées au montage.

L'invention a pour objet une suspension de roue notamment arrière de véhicule du type exposé dans le préambule de la revendication principale et dont les particularités ressortent, notamment, de sa partie caractérisante.

L'invention est aussi remarquable en ce que cette suspension convient à une roue motrice de véhicule.

D'autres caractéristiques de l'invention ressortiront de la description qui suit et de l'examen du dessin annexé donné seulement à titre d'exemple, où:

– la Fig. 1 est une vue schématique en élévation d'un mode de réalisation d'une suspension selon l'invention, vue de l'arrière d'un véhicule;

– la Fig. 2 est une de dessus, partiellement en coupe suivant II–II, de la Fig. 1;

– les Fig. 3a à 3c sont des croquis schématiques correspondant à la Fig. 1 illustrant le comportement de la suspension selon l'invention suivant que la biellette est placée en position basse, médiane ou haute;

– les Fig 4a, 4b et 4c sont des croquis schématiques d'une coupe par un plan horizontal $P_a$, $P_b$, $P_c$, passant par l'axe de la biellette qui correspondent respectivement aux situations représentées sur les vues.a, b et c det la Fig.3.

Les suspensions de véhicules étant bien connues dans la technique, la description qui suit sera limitée à ce qui concourt directement ou indirectement à l'invention. On ne s'étendra donc pas plus longuement sur le reste du véhicule. On notera, toutefois, que les articulations dont il est question dans la présente demande sont des articulations élastiques qui définissent un axe ou un centre géométrique de basculement, de rotation ou de pivotement mais qui, outre ce degré de liberté. tolèrent une certaine flexibilité et une certaine mobilité. Les déplacements qu'autorisent ces liaisons élastiques doivent être considérés comme étant du second ordre comparés aux déplacements qu'elles permettent selon leurs axes ou centres géométriques. Ce type d'articulations élastiques, qui autorisent des rotations autour d'un axe ou d'un centre sont suffisamment bien connues et d'usage courant pour qu'il ne soit pas nécessaire de s'y étendre plus amplement.

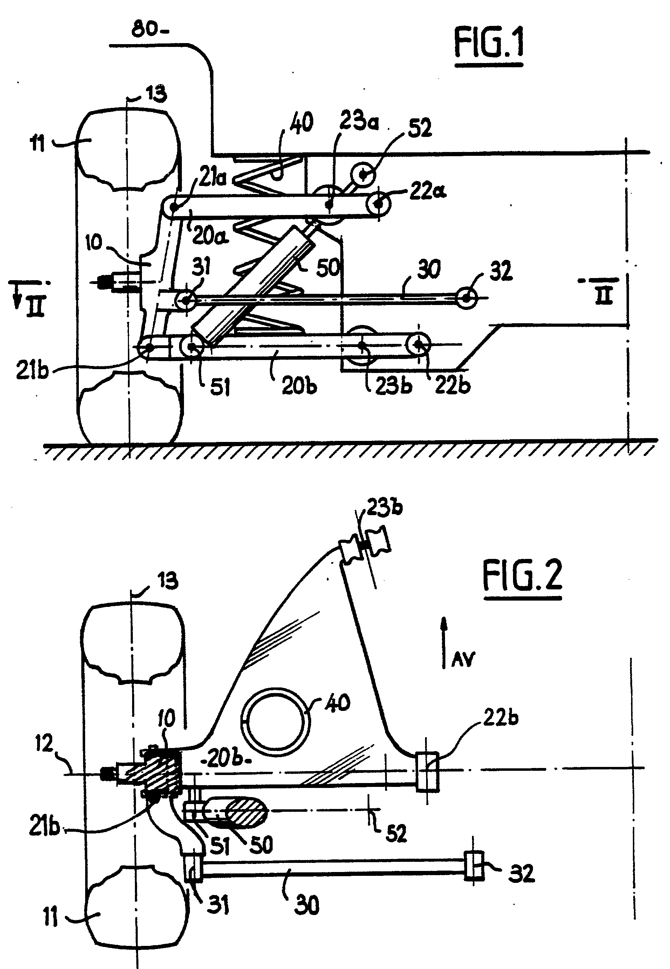

La suspension selon l'invention comprend un support de roue 10 auquel est fixée une roue 11. L'axe de cette roue est situé dans un plan vertical 12 (voir Fig.2) pratiquement perpendiculaire à l'axe longitudinal du véhicule, dans le cas présent parallèle au plan de la feuille sur laquelle est dessinée la Fig.1. Le plan médian 13 de la roue est pratiquement parallèle à l'axe longitudinal du véhicule.

La suspension comprend aussi un élément de guidage supérieur et un élément de guidage inférieur des triangles 20a et 20b, respectivement. Comme on le voit sur la Fig.1 et sur la Fig.2, ces triangles sont réunis par l'une de leurs extrémités au support de roue par des articulations élastiques 21a et 21b, respectivement, qui définissent des axes de basculement horizontaux pratiquement parallèles à l'axe longitudinal du véhicule. Par leurs autres extrémités, les triangles sont reliés à la structure 80, caisse ou châssis, du véhicule par des articulations. L'une de ces articulations 22a et 22b de chacun des triangles 20a et 20b, respectivement, est constituée d'une articulation souple qui définit un axe de basculement sensiblement horizontal, pratiquement parallèle à l'axe longitudinal du véhicule. L'autre de ces articulations 23a et 23b respectivement, est une articulation de très grande flexibilité, comparée notamment à celle des articulations 22a et 22b précédemment indiquées pour la raison que l'on exposera par la suite. Comme on le voit schématiquement sur la Fig.2, les axes de basculement des articulations 23a et 23b sont obliques et dans le sens d'une certaine divergence lorsqu'on regarde vers l'avant du véhicule comme indiqué par la flèche AV. En examinant la Fig.2, on observera que les quatre articulations 21a, 22a, d'une part, et 21b, 22b, d'autre part, des triangles inférieur et supérieur, respectivement, sont situées dans un plan qui est pratiquement vertical et proche sinon confondu avec le plan vertical 12.

La suspension selon l'invention comprend aussi une biellette 30 dont l'une des extrémités 31 est articulée sur le support de roue 10 et dont l'autre 32 est articulée sur la structure 80. Ces deux articulations de la biellette avec le support de roue et la structure ne présentent pas le degré de flexibilité ou souplesse que l'on a mentionné à propos des articulations 21 et 22 des tiangles inférieur et supérieur. La biellette est située en arrière du plan vertical 12 et pratiquement orientée parallèlement à celui-ci et aux triangles. On reviendra par la suite sur le rôle essentiel que joue la position ou altitude de la biellette.

La suspension comprend encore un ressort 40, par exemple un ressort hélicoïdal, qui repose sur le triangle inférieur 20b d'une part, et sur la structure 80 d'autre part, en traversant un ajour, non dessiné, approprié du triangle supérieur 20a. La suspension comprend en outre un amortisseur 50 qui est relié au triangle inférieur 20b par une articulation 51 à son extrémité inférieure et à la structure 80 par une articulation 52 à son extrémité supérieure.

Le ressort et l'amortisseur étant des éléments classiques, on ne s'étendra pas plus amplement sur les particularités de leur disposition et de leur liaison respectives.

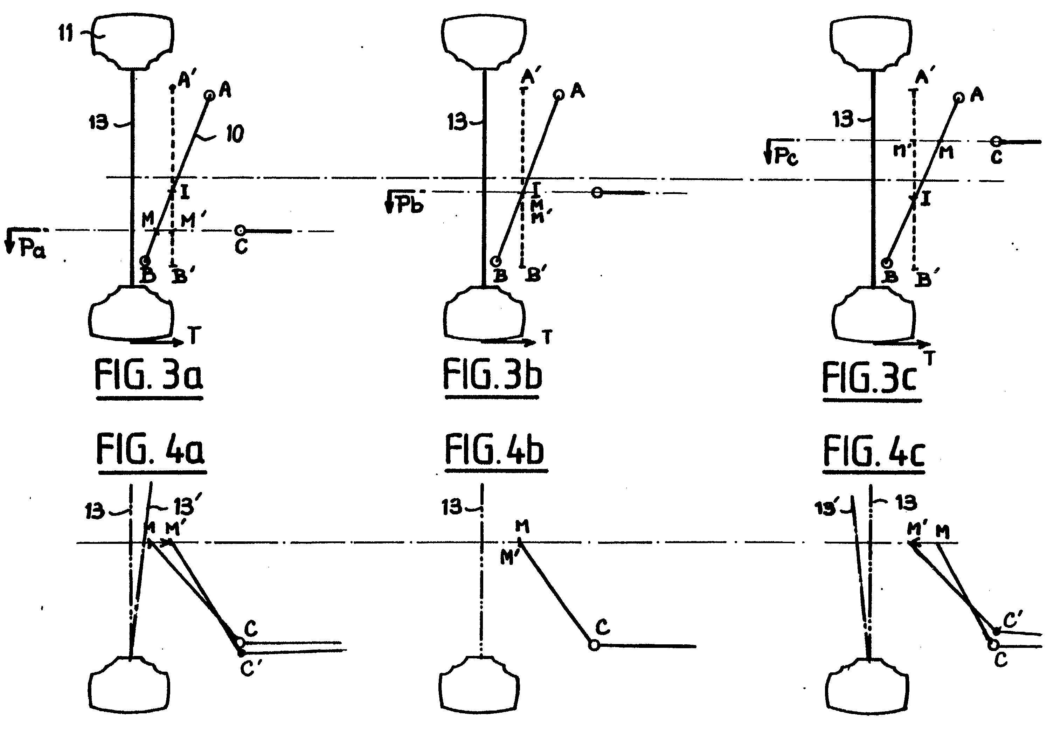

Pour comprendre l'invention on se reportera maintenant aux croquis des Fig.3 et 4 où se trouve illustré d'une manière très schématique le comportement de la suspension selon l'invention, lorsque le véhicule est en virage, en fonction de l'altitude relative donnée à la biellette.

Pour la commodité de l'exposé et la faciliaté de la compréhension, on supposera que le véhicule est animé d'un mouvement uniforme et qu'il se déplace sur un plan horizontal parfait. Les seules forces auxquelles il est alors soumis sont l'effort latéral résultant de l'inscription du véhicule dans une courbe, son poids et la réaction du sol dont seule la composante transversale T, au sol, importe ici.

En regardant à la Fig.3, on voit que la roue 11 y est dessinée schématiquement et que le support de roue 10 y est figuré par un segment de droite AB dont les extrémités A et B correspondent respectivement aux articulations 21a et 21b. Le point C correspond à l'articulation 31 de la biellette 30. Comme on le remarque sur les croquis a, b, c seule change l'altitude du point C par rapport à l'axe de roue. On observera qu'à sa position de repos en roulage rectiligne du véhicule dans les conditions que l'on vient de rappeler, l'axe du segment AB passe par la zone de contact de la roue avec le sol, à l'intersection du plan vertical 12 et du plan médian 13, zone où s'exerce la réaction du sol et donc l'effort transversal T dû au virage du véhicule. Le point C est pratiquement fixe en direction transversale, et sous l'effet de la réaction, par suite de l'élasticité des liaisons 21a et 21b, les points A et B tendent a se déplacer un peu et le support de roue qui avait l'inclinaison AB tend à changer d'orientation ou plus précisément à basculer et à se redresser pour prendre la position A′B′ . Il est clair que sur la Fig.3, on a très fortement exagéré l'amplitude de ce basculement autorisé par les liaisons flexibles, élastiques entre les triangles et le support de roue. Tout se passe comme si le support de roue AB avait légèrement basculé autour d'un point I; ce point peut être considéré comme fixe car sa position ne dépend en pratique que de l'élasticité ou rigidité propre aux articulations des extrémités des triangles.

Le plan horizontal passant par la biellette 31 c'est-à-dire C coupe le segment AB en M et le segment A′B′ en M′ . Si l'on se reporte à la Fig.4 qui correspond à cette situation et qui est la trace de la suspension schématique par le plan horizontal passant par la biellette, on voit que tout se passe comme si le support de roue et donc le plan médian 13 avaient subi une petite rotation autour du point C pour prendre la position 13′ , par suite du léger déplacement transversal de M vers M′ et du léger déplacement induit longitudinal de C vers C′ .

En regardant les croquis a des Fig.3 et 4 où le point C, c'est-à-dire la biellette, est situé au-dessous du point I, on voit que le plan médian 13 a un peu tourné dans un sens qui correspond à une convergence de la roue par rapport à l'axe du véhicule. Ceci se traduit par un effet sous-vireur puisque la roue avant directrice du véhicule est braquée dans la même direction. La roue arrière a donc un micro-braquage qui s'oppose au braquage primaire de la roue antérieure.

Les croquis b et c correspondent aux cas où l'axe de la biellette est dans le plan horizontal passant par le point I ou dans un plan horizontal qui est au-dessus du point I, respectivement.

En se reportant aux croquis 4b et 4c respectivement, on voit que lorsque le point C est à l'altitude du point I l'effet est neutre et le plan médian de la roue ne tourne pas alors que lorsque le point C est à une altitude supérieure à celle du point I le plan médian de la roue tend à diverger ce qui donne un comportement sur-vireur au véhicule.

Cette petite rotation du support de roue autour d'un axe voisin de la verticale est autorisé par les liaisons élastiques. Comme on l'a indiqué, ce petit déplacement doit être considéré comme du second ordre et est grandement exagéré sur les figures seulement pour mieux faciliter la perception du phénomène.

Pour pouvoir changer facilement l'altitude de la biellette en lui conservant son horizontalité, la structure et le support de roue sont équipés de construction de points d'ancrage appropriés pour le montage des articulations situées aux extrémités de la biellette.

On voit que grâce à l'emplacement des articulations 21a, 22a, 21b, 22b, dans le plan 12, il est possible de transmettre des efforts transversaux importants au niveau de l'essieu sans provoquer la moindre réaction longitudinale et il est possible de rendre porteur l'un des triangles sans non plus induire de réaction longitudinale.

En outre, on observera qu'en l'absence de réaction transversale T, en roulage rectiligne du véhicule, la roue peut "flotter" longitudinalement en gardant parfaitement son cap. En effet, chaque triangle pivote, en plan, autour de son articulation à la caisse située dans le plan 12 de l'essieu (articulations 22a et 22b) et la stabilité du cap est maintenue par l'effet du parallélogramme formé par les articulations (21a,22a; 21b, 22b) de chaque triangle avec la biellette 30 articulée en 31 et 32.

De ce qui précède, on voit qu'en modifiant l'altitude de la biellette 30 par rapport au point de basculement I du support de roue il est possible d'adapter le comportement routier du véhicule pour lui donner des tendances sur-vireuse, neutre ou sous-vireuse. En outre, comme on l'a indiqué précédemment, la position du point I est liée à la raideur des articulations 21 et 22. Le réglage de la raideur de ces articulations constitue donc un paramètre de réglage supplémentaire puisqu'il permet, pour une position de biellette donnée, d'ajuster l'altitude relative du point I et donc l'importance du micro-braquage. Ceci est particulièrement intéressant car cet ajustement peut se faire au moment de la mise au point finale du véhicule sans qu'il y ait lieu de changer aucune des pièces constitutives de la suspension conforme à l'invention.

La suspension selon l'invention présente encore l'avantage qu'en faisant en sorte que l'axe AB soit sécant avec le sol le plus près possible du plan médian de la roue on minimise voire annule les couples induits au freinage autour de cet axe.

On a indiqué précédemment que les axes des articulations 23a et 23b des triangles supérieur et inférieur respectivement présentaient une certaine convergence de manière à réduire les délestages de l'arrière du véhicule au freinage. Toutefois, cette convergence peut être obtenue d'une manière préférentielle en faisant en sorte que le triangle porteur 20b demeure horizontal afin de ne pas induire d'efforts horizontaux permanents. L'articulation 23, que ce soit celle du triangle supérieur ou du triangle inférieur, présente une très grande flexibilité ou souplesse de manière à assurer le filtrage des vibrations. C'est pourquoi, il est nécessaire de prévoir des limites à son débattement. Ce type d'articulation étant bien connu dans la technique on ne s'y étendra pas plus longuement, il suffit de rappeler les caractéristiques auxquelles elle satisfait.

Dans un mode de réalisation préféré de l'invention, l'articulation la plus souple de chaque triangle est placée à l'avant de l'essieu alors que la biellette est placée en arrière de celui-ci.

Comme on le voit en se reportant aux Fig.1 et 2, c'est le triangle inférieur qui a été rendu porteur à l'aide du ressort hélicoïdal 40. Comme on l'a aussi indiqué, l'amortisseur 50 est intercalé entre les bras transversaux des triangles 20a, 20b et la biellette 30. Grâce à cette disposition, l'amortisseur peut être fortement incliné vers l'axe de la structure tout en conservant une bonne efficacité et sans nuire au filtrage des vibrations. Une telle disposition permet de le placer sous un plancher de coffre sans qu'il fasse saillie dans son volume et nuise ainsi à la place disponible.

On remarquera aussi que la suspension selon l'invention que l'on vient de décrire convient pour un véhicule à traction avant aussi bien qu'à un véhicule à propulsion arrière, voire à un véhicule à quatre roues motrices. En effet, rien ne s'oppose au passage d'une transmission au centre des roues, entre les triangles inférieur et supérieur.

En outre, on pourra utiliser selon les différents besoins les possibilités de réglage que l'on a indiqué soit en procédent à des ajustements des rigidités des liaisons élastiques soit en modifiant l'altitude de la biellette, ce qui peut se faire sans difficulté si d'une part le support de roue et d'autre part la structure sont équipés des points d'ancrage appropriés nécessaires pour la fixation des articulations d'extrémité de la biellette.

**Revendications**

1. Suspension de roue notamment arrière de véhicule comportant un support de roue (10) relié à la structure (80) du véhicule à l'aide d'une biellette (30) transversale et de deux triangles (20) supérieur et inférieur qui sont chacun reliés d'une part au support de roue (10) par une articulation (21) située au voisinage d'un planvertical transversal (12) passant par le centre de la roue et d'autre part à la structure (80) par deux articulations (22, 23), la biellette (30) étant articulée à ses extrémités de manière à être pratiquement fixe en direction transversale et étant pratiquement parallèle à ce plan vertical (12) et de longueur (31, 32) peu différente de la distance entre deux articulations (21b, 22b) qui sont associées à l'un des triangles, caractérisée en ce que, de façon connue en soi l'une (22) des deux articulations reliant chaque triangle à la structure est située au voisinage de ce plan vertical (12), tandis que l'autre (23) de ces deux articulations présente une flexibilité notablement supérieure à celle des autres articulations (21, 22), en ce que les articulations (21a, 21b, 22a, 22b) situées au voisinage dudit plan vertical (12) présentent de flexibilités telles qu'elles déterminent un centre (I) de basculement transversal du support (10) situé sensiblement à la même hauteur que l'articulation (31) de la biellette sur le support de sorte qu'un basculement du support dû une force latérale du sol sur la roue n'induise pas de micro-braquage de la roue et en ce qu'au moins les articulations situées au voisinage du plan (12) sont à axe sensiblement horizontal.

2. Suspension de roue notamment arrière de véhicule comportant un support de roue (10) relié à la structure (80) du véhicule à l'aide d'une biellette (30) transversale et de deux triangles (20) supérieur et inférieur qui sont chacun reliés d'une part au support de roue (10) par une articulation (21) située au voisinage d'un plan vertical transversal (12) passant par le centre de la roue et d'autre part à la structure (80) par deux articulations (22, 23), la biellette (30) étant articulée à ses extrémités de manière à être pratiquement fixe en direction transversale et étant pratiquement parallèle à ce plan vertical (12) et de longueur (31, 32) peu différente de la distance entre deux articulations (21b, 22b) qui sont associées à l'un des triangles, caractérisée en ce que, de façon connue en soi l'une (22) des deux articulations reliant chaque triangle à la structure est située au voisinage de ce plan vertical (12), tandis que l'autre (23) de ces deux articulations présente une flexibilité notablement supérieure à celle des autres articulations (21, 22), en ce que les articulations (21a, 21b, 22a, 22b) situées au voisinage dudit plan vertical (12) présentent des flexibilités telles qu'elles déterminent un centre (I) de basculement transversal du support (10) situé notablement plus haut ou plus bas que l'articulation (31) de la biellette sur le support de sorte que le susdit basculement induise un micro-braquage de la roue et en ce qu'au moins les articulations situées au voisinage du plan (12) sont à axe sensiblement horizontal.

3. Suspension conforme à la revendication 1 ou 2, caractérisée en ce que l'altitude de la biellette (30) est modifiable.

4. Suspension conforme à la revendication 1, 2 ou 3, caractérisée en ce que la biellette (30) est située en arrière de ce plan vertical.

5. Suspension conforme à l'une quelconque des revendications 1 à 4, caractérisée en ce que l'un des triangles (20) est porteur.

6. Suspension conforme à la revendication 5, caractérisée en ce que celui des triangles qui est porteur est un triangle inférieur (20b).

7. Suspension conforme à l'une quelconque des revendications 1 à 6, équipée d'un amortisseur reliant l'un de triangles à la structure, caractérisée en ce que l'amortisseur (50) est intercalé entre les triangles (20) et la biellette (30).

8. Suspension conforme à la revendication 7, caractérisée en ce que l'amortisseur (50) est incliné vers l'intérieur à partir du support de roue (10).

9. Application de la suspension suivant l'une quelconque des revendications 1 à 8, à la suspension d'une roue arrière.

**Claims**

1. Wheel suspension, particularly rear wheel suspension for a vehicle having a wheel support (10) connected to the vehicle structure (80) with the aid of a transverse link (30) and two upper and lower triangles (20), each of which is connected on the one hand to the wheel support (10) by an articulation (21) located in the vicinity of a transverse vertical plane (12) passing through the centre of the wheel and on the other hand to the structure (80) by two articulations (22, 23), the link (30) being articulated at its ends so as to be substantially fixed in the transverse direction and substantially parallel to said vertical plane (12) and of length (31, 32) differing only slightly from the distance between the two articulations (21b, 22b) which are associated with one of the triangles, characterized in that, in per se known manner, one (22) of the two articulations connecting each triangle to the structure is located in the vicinity of said vertical plane (12), whilst the other (23) of said two articulations has a flexibility significantly greater than that of the other articulations (21, 22), in that the articulations (21a, 21b, 22a, 22b) located in the vicinity of said vertical plane (12) have flexibilities such that they determine a transverse tilting centre (I) of the support (10) located substantially at the same level as the articulation (31) of the link on the support, in such a way that a tilting of the support due to a lateral force of the ground on the wheel does not induce a micro-steering lock thereof and in that at least the articulations located in the vicinity of the plane (12) have a substantially horizontal axis.

2. Wheel suspension, particularly rear wheel suspension for a vehicle having a wheel support (10) connected to the vehicle structure (80) with the aid of a transverse link (30) and two upper and lower triangles (20), each of which is connected on the one hand to the wheel support (10) by an articulation (21) located in the vicinity of a transverse vertical plane (12) passing through the centre of the wheel and on the other hand to the structure (80) by two articulations (22, 23), the link (30) being articulated at its ends so as to be substantially fixed in the transverse direction and substantially parallel to said vertical plane (12) and of length (31, 32) differing only slightly from the distance between the two articulations (21b, 22b) which are associated with one of the triangles, characterized in that in per se known manner, one (22) of the two articulations connecting each triangle to the structure is located in the vicinity of said vertical plane (12), whilst the other (23) of said two articulations has a flexibility significantly greater than that of the other articulations (21, 22), in that the articulations (21a, 21b, 22a, 22b) located in the vicinity of said vertical plane (12) have flexibilities such that they determine a transverse tilting centre (I) of the support (10) located higher or lower than the articulation (31) of the link on the support, in such a way that said tilt induces a micro-steering lock of the wheel and in that at least the articulations located in the vicinity of the plane (12) have a substantially horizontal axis.

3. Suspension according to claim 1 or 2, characterized in that the height of the link (30) can be modified.

4. Suspension according to claims 1, 2 or 3, characterized in that the link (30) is located to the rear of said vertical plane.

5. Suspension according to any one of the claims 1 to 4, characterized in that one of the triangles (20) is bearing.

6. Suspension according to claim 5, characterized in that the bearing triangle is a lower triangle (20b).

7. Suspension according to any one of the claims 1 to 6 equipped with a shock absorber connecting one of the triangles to the structure, characterized in that the shock absorber (50) is placed between the triangles (20) and the link (30).

8. Suspension according to claim 7, characterized in that the shock absorber (50) is inclined towards the inside from the wheel support (10).

9. Application of the suspension according to any one of the claims 1 to 8 to the suspension of a rear wheel.

**Patentansprüche**

1. Radaufhängung insbesondere Hinterradaufhängung für ein Fahrzeug mit einem Radhalter (10), der mit der Karosserie (80) des Fahrzeuges über eine Querschwinge (30) und zwei obere und untere Dreiecke (20) verbunden ist, die jeweils einerseits mit dem Radhalter (10) über ein Gelenk (21), das sich in der Nähe einer vertikalen Querebene (12) befindet, die durch die Mitte des Rades geht, und andererseits an der Karosserie (80) über zwei Gelenke (22, 23) verbunden sind, wobei die Schwinge (30) an ihren Enden derart angelenkt ist, daß sie in einer Querrichtung praktisch festliegt und praktisch parallel zu der vertikalen Ebene (12) verläuft und eine Länge (31, 32) hat, die etwas von dem Abstand zwischen den beiden Gelenken (21b, 22b) verschieden ist, die zu einem der Dreiecke gehören, dadurch gekennzeichnet, daß in an sich bekannter Weise eines der beiden Gelenke (22), das jedes Dreieck mit der Karosserie verbindet, in der Nähe der vertikalen Ebene (12) angeordnet ist, während das andere (23) der beiden Gelenke eine Flexibilität hat, die merklich über der der anderen Gelenke (21, 22) liegt, die Gelenke (21a, 21b, 22a, 22b), die in der Nähe der genannten vertikalen Ebene (12) angeordnet sind, eine Flexibilität haben, derart, daß sie den Mittelpunkt (I) der transversalen Schwenkbewegung der Schwinge (10) so festlegen, daß er im wesentlichen auf der gleichen Höhe wie das Gelenk (31) der Schwinge am Halter liegt, so daß eine Schwenkbewegung des Halters aufgrund einer seitlichen Kraft vom Boden auf das Rad nicht zu Mikroausschlägen des Rades führt, und wenigstens die Gelenke, die sich in der Nähe der Ebene (12) befinden, eine im wesentlichen horizontale Achse haben.

2. Radaufhängung, insbesondere Hinterradaufhängung eines Fahrzeuges mit einem Radhalter (10), der mit der Karosserie (80) des Fahrzeuges über eine Querschwinge (30) und ein oberes und ein unteres Dreieck (20) verbunden ist, die jeweils einerseits mit dem Radhalter (10) über ein Gelenk (21), das sich in der Nähe einer querverlaufenden vertikalen Ebene (12) befindet, die durch den Mittelpunkt des Rades geht, und andererseits mit der Karosserie (80) über zwei Gelenke (22, 23) verbunden sind, wobei die Schwinge (30) an ihren Enden derart angelenkt ist, daß sie praktisch in Querrichtung festliegt und praktisch parallel zu der vertikalen Ebene (12) verläuft und eine Länge (31, 32) hat, die etwas vom Abstand zwischen den beiden Gelenken (21b, 22b) verschieden ist, die zu einem der Dreiecke gehören, dadurch gekennzeichnet, daß in an sich bekannter Weise eines (22) der beiden Gelenke, die jedes Dreieck mit der Karosserie verbinden, in der Nähe der vertikalen Ebene (12) angeordnet ist, während das andere (23) der beiden Gelenke eine Flexibilität hat, die wesentlich über der der anderen Gelenke (21, 22) liegt, die Gelenke (21a, 21b, 22a, 22b), die in der Nähe der genannten vertikalen Ebene (12) angeordnet sind, eine Flexibilität haben derart, daß sie den Mittelpunkt (I) der transversalen Schwenkbewegung des Halters (10) so festlegen, daß er wesentlich über oder wesentlich unter dem Gelenk (31) der Schwinge am Halter liegt, so daß die genannte Schwenkbewegung zu einem Mikroausschlag des Rades führt, und wenigstens die Gelenke, die sich in der Nähe der Ebene (12) befinden, eine im wesentlichen horizontale Achse haben.

3. Aufhängung nach Anspruch 1 oder 2, dadurch gekennzeichnet, daß die Höhe der Schwinge (30) veränderbar ist.

4. Aufhängung nach Anspruch 1, 2 oder 3, dadurch gekennzeichnet, daß die Schwinge (30) sich rückwärts von der vertikalen Ebene befindet.

5. Aufhängung nach einem der Ansprüche 1 bis 4, dadurch gekennzeichnet, daß eines der Dreiecke (20) tragend ist.

6. Aufhängung nach Anspruch 5, dadurch gekennzeichnet, daß das Dreieck, das tragend ist, das untere Dreieck (20b) ist.

7. Aufhängung nach einem der Ansprüche 1 bis 6 mit einem Stoßdämpfer der eines der Dreiecke mit der Karosserie verbindet, dadurch gekennzeichnet, daß der Stoßdämpfer (50) zwischen den Dreiecken (20) und der Schwinge (30) angeordnet ist.

8. Aufhängung nach Anspruch 7, dadurch gekennzeichnet, daß der Stoßdämpfer (50) schräg nach innen vom Radhalter (10) aus verläuft.

9. Verwendung einer Aufhängung nach einem der Ansprüche 1 bis 8 als Aufhängung eines Hinterrades.

EP 0 239 449 B1

FIG.1

FIG.2

FIG. 3a   FIG.3b   FIG.3c

FIG. 4a   FIG.4b   FIG.4c

EP 0 239 449 B1